Europäisches Patentamt

European Patent Office

Office européen des brevets

(19)

(11) Publication number: **0 073 586**
A1

(12) # EUROPEAN PATENT APPLICATION

(21) Application number: **82304237.9**

(22) Date of filing: **11.08.82**

(51) Int. Cl.³: **F 16 D 13/68**

(30) Priority: **29.08.81 GB 8126428**

(43) Date of publication of application: **09.03.83**
**Bulletin 83/10**

(84) Designated Contracting States: **BE DE FR GB IT SE**

(71) Applicant: **AUTOMOTIVE PRODUCTS PUBLIC LIMITED
COMPANY, Tachbrook Road, Leamington Spa
Warwickshire CV31 3ER (GB)**

(72) Inventor: **Davies, David Aubrey, 97 Lime Avenue
Lillington, Leamington Spa Warwickshire (GB)**

(74) Representative: **Farrow, Robert Michael, Patent
Department Automotive Products plc Tachbrook Road,
Leamington Spa Warwickshire CV31 3ER (GB)**

(54) **Friction clutch driven plates.**

(57) A clutch driven plate having an annular friction facing carrier member (15) capable of angular rotation about a hub member (11) said rotation being resisted by resilient means (21) acting between the members (11) and (15). Each resilient means (21) comprises a chordal leaf spring (22) backed by an elastomeric block (23) on its radially outer side. The block (23) is mounted at a portion along the spring (22) so that it only comes into operation after a predetermined initial degree of rotation.

-1-

## "Friction Clutch Driven Plates"

This invention relates to friction clutch driven plates, for but not exclusively for, use on motor vehicle friction clutches.

A typical friction clutch driven plate comprises an annular friction facing carrier member capable of relative angular rotation about a hub member, said rotation being opposed by resilient means acting between the members. Such a driven plate will hereinafter be called a driven plate of the kind referred.

A driven plate of the kind referred is described in British Patent 473 596 in which the relative rotation is resisted by V-shaped leaf springs each having a rubber block disposed within the 'V'. The relative movement between the hub member and facing carrier member causes one side of each of the 'V' leaf springs to move to compress its respective rubber block, so resisting the rotation.

This construction of driven plate has disadvantages in that the constant flexing of the 'V' shaped leaf spring will cause it to fatigue at the centre of the spring.

-2-

Also modern driven plates frequently have an auxiliary resilient means that is used to damp out movement between the carrier and the hub and thereby prevent gearbox idle rattle when the vehicle is idling, and main resilient means that damp out oscillations in the drive load when the vehicle is in motion. A driven plate as shown in British Patent 473 596 is unsuitable for damping out idle rattle because it cannot provide for different resilient means to come into operation during different sectors of rotation of the facing carrier about the hub.

It is the object of this invention to provide a driven plate which utilises a leaf spring and is suitable for damping out gearbox idle rattle.

Accordingly there is provided a clutch driven plate of the kind referred characterised in that said resilient means each comprise a leaf spring mounted on one of said members and which is distorted radially by said rotation, and a resilient member acting radially against the leaf spring and mounted on said one member adjacent the leaf spring and located at a portion along the length of the leaf spring and so that it is brought into operation by radial movement of the leaf spring after an initial degree of rotation of the carrier member about the hub member.

Conveniently the resilient member acting radially against the leaf spring is an elastomeric block located adjacent the leaf spring, and at a mid length point along the leaf spring.

The invention will be described by way of example and with reference to the accompanying drawings in which:-

Fig. 1 is an elevation of a clutch driven plate according to this invention with the retainer plate removed;

Fig. 2 is a section on the line II-II of Fig. 1;

Fig. 3 is a section on the line III-III of Fig. 2;

Fig. 4 is a graph of torque load versus rotational displacement for a driven plate as illustrated in Fig. 1; and

Fig. 5 is an elevation of an alternative driven plate according to this invention.

-4-

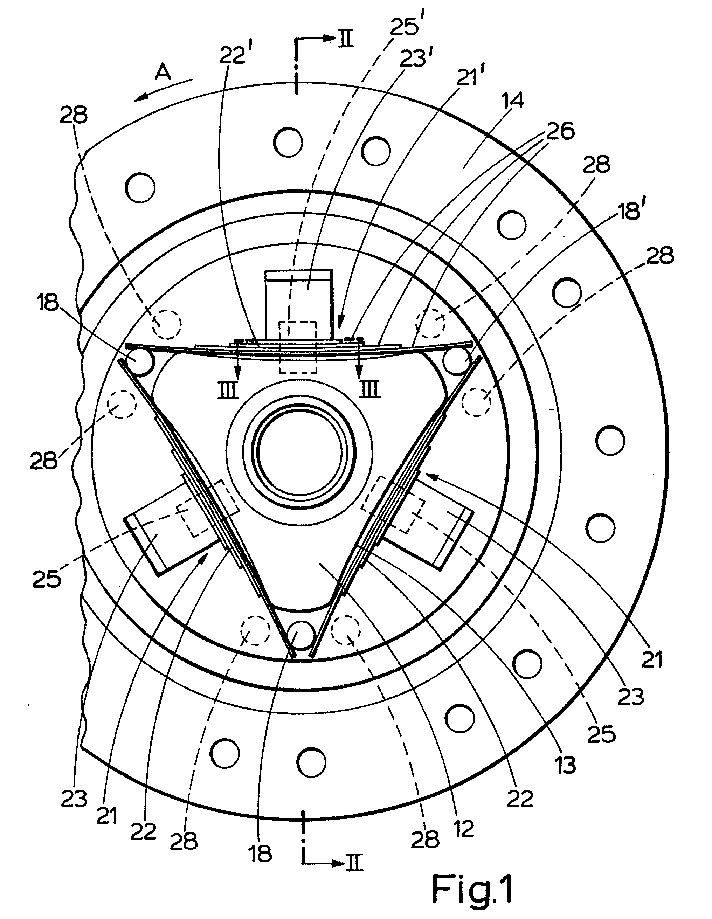

With reference to Figs. 1 to 3 a friction clutch driven plate for an automobile has a hub member 11 with a circumferential flange 12 thereon. The outer peripheral edge 13 of the flange 12 is shaped in a cam form which in this case is substantially triangular.

A pair of opposed annular friction facings 14 are co-axially mounted on a friction facing carrier member 15 which comprises an annular facing carrier plate 16 located on one side of the flange 12, and an annular retainer plate 17 located on the other side of the flange 12 and secured to the carrier plate 16 by three equiangularly spaced rivets 18. The friction facing carrier member 15 can rotate about the hub member 11, this rotation being opposed by three resilient means 21.

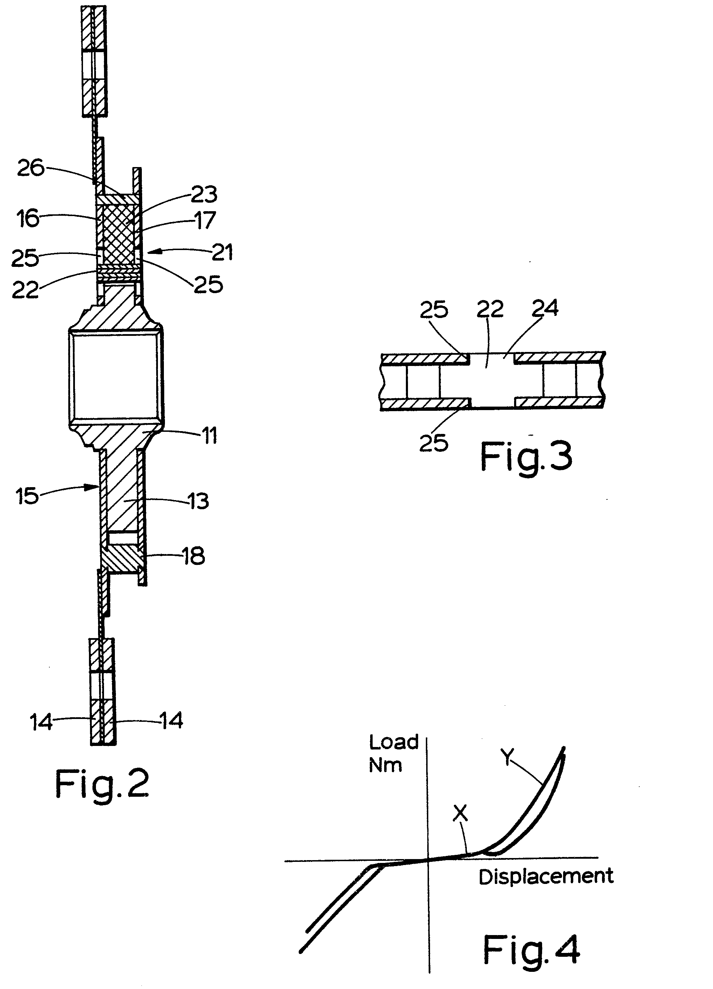

The resilient means 21 are located adjacent each face of the triangular flange 12 and each comprises a leaf spring 22 arranged on a chord of annular plates 16 and 17, and an elastomeric block 23 adjacent the radially outer face of the spring 22, and at its approximate mid-length. Each leaf spring 22 comprises four spring steel leaves 26 which decrease step-wise in length radially outwardly, and each spring is housed between the plates 16 and 17 so that it is free to move therebetween. The mid-portion of each leaf spring has axially projecting lugs 24 thereon (see Fig. 3) that are accommodated in radial slots 25 in the plates 16 and 17 so as to locate the respective spring. Each slot 25 allows the respective spring 22 to move radially.

Each elastomeric block 23 is fixed to a backing plate 26 by adhesive, and the backing plate is located in slots in the side plates 16 and 17. Each block 23 acts radially against the leaf spring to bias its respective spring radially inwardly in the slot 25, the radial inward movement being limited by abutment against two of the rivets 18 which are located one at each end of a leaf spring.

With reference to Fig. 4, the driven plate operates in the following manner with the hub member held stationary and the friction facing rotated in an anti-clockwise direction (arrow A) so that the plate is operating in its drive mode.

(i)     Taking the resilient member 21' for example, the left hand end portion of the leaf spring 22 will be held by the lobe of the flange 12 and the right hand end portion of the leaf spring will be deflected by the anti-clockwise movement of the pin 18', thereby forming a low load damper suitable for damping out idle rattle.  This is the part X of the curve of Fig. 4.

(ii)     Further anti-clockwise movement of the pin 18' will cause the centre portion spring 22' to move radially outwards against the bias of the elastomeric block 23'.  The natural internal hysteresis of the elastomer will give rise to some friction damping.  Furthermore the spring rate of the elastomeric block can be chosen to provide the necessary torsional damping and will by much higher than the initial soft leaf spring.  This is the part Y of the curve.  The anti-clockwise movement will continue until the spring 22' reaches the radially outer end of its slot 25'.

The reverse clockwise movement with the plate operating in its overdrive mode will result in the reverse sequence of events.

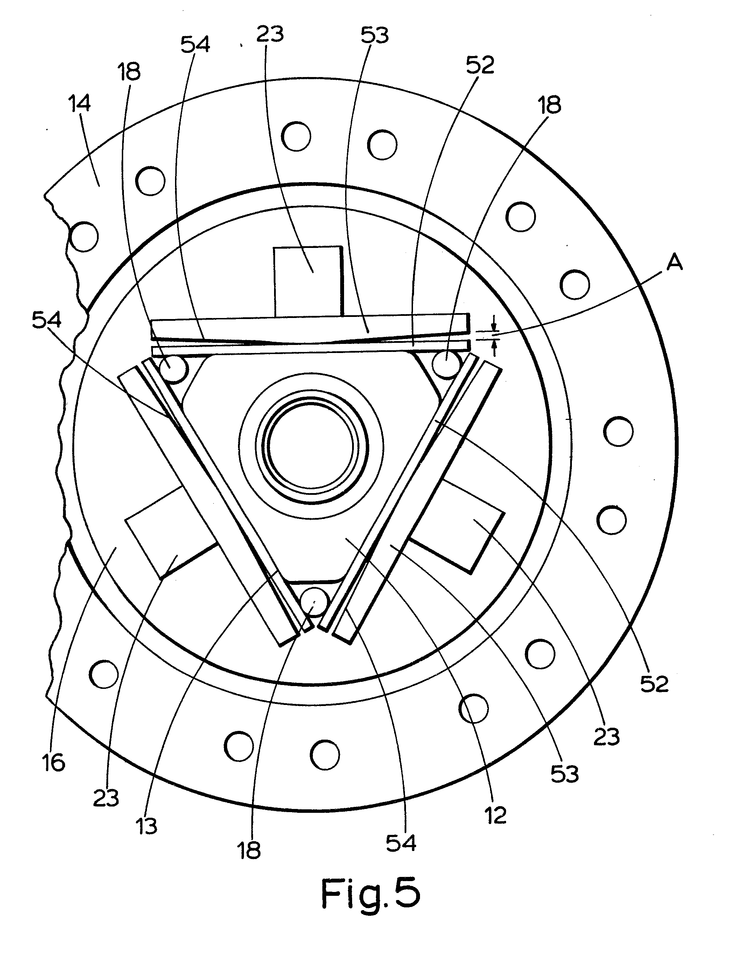

Now with reference to Fig. 5, which shows a second embodiment of the invention and in which the same components as previously described in Figs. 1-3 will have the same reference numerals. Each leaf spring 52 is a carbon fibre resilient beam backed up by a stiff support lever 53 and each lever 53 then reacts back onto the elastomeric block 23. The face 54 of the lever 53 adjacent the resilient beam 52 is inclined to taper away from the beam so that there is a clearance 'A' between the end portions of the beam and the support lever.

When the clutch driven plate takes up drive the facing carrier 16 rotates deflecting each leaf spring, i.e. the carbon fibre beam 52, until the gap 'A' has been closed. This is the initial idle rattle damping. As the drive continues the beam 52 and lever 53 are moved against the main damping rubber block 23 which now comes into operation to damp the driving loads.

This construction has several advantages in that as the carrier 16 rotates the contact point between the hub flange 12 and the beam 52 moves towards the centre of the beam increasing its effective stiffness before the elastomeric block 23 comes into operation.

0073586

-8-

The shape of the beam 52 can be varied to give the required torque versus deflection characteristics for the driven plate, and the angle of inclination on the backing lever 53 can also be altered so that the clearance 'A' can be varied as required. Indeed the three support levers 53 could have different clearances so that the elastomeric blocks 25 come into operation at different times.

Furthermore the triangle faces of the flange can be shaped to give the form of load/deflection curve desired, and to this end the rubber block need not necessarily be in the mid length position but may be offset so that the drive and overdrive curves are different.

Also it is envisaged that the rubber block 23 could be replaced by a radially aligned coil spring.

In a further adaption of the herein diclosed invention the outward movement of the end portions of each leaf spring can each be limited by pins 28 so that further movement of the carrier member 15 about the hub member 11 causes the end portions of each leaf spring to be held in position and the central portion of the spring to distort. This obviously will change the operational characteristics of a given leaf spring from when the ends are free.

Claims

1.      A clutch driven plate having an annular
friction facing carrier member (15) capable of angular
relative rotation about a hub member (11), said
rotation being opposed by resilient means (21) acting
between the members (11) and (15), characterised
in that said resilient means (21) each comprise a
chordal leaf spring (22) mounted on one of said
members (11) and (15) and which is distorted by said
rotation, and a resilient member (23) acting radially
against the leaf spring (22) and mounted on said one
member (11) or (15) adjacent the leaf spring (22)
and located at a portion along the length of the leaf
spring and so that it is brought into operation after an
initial degree of rotation of the carrier member (15)
about the hub member (11).

2.      A clutch driven plate as claimed in Claim 1,
characterised in that the resilient means (22) is
mounted on the friction facing carrier member (15)
and the hub member (11) has a cam surface (13)
on the outer peripheral edge of a flange (12) on
the hub member and against which the resilient member
(22) reacts during said rotation.

0073586

-10-

3.      A driven plate as claimed in Claim 1 or Claim 2, characterised in that each resilient member (23) acting radially against its respective leaf spring (22) is an elastomeric block (23) which acts against the leaf spring and can undergo limited radial compression.

4.      A driven plate as claimed in Claim 3, characterised in that each elastomeric block (23) is located at a mid-length position of its respective leaf spring.

5.      A driven plate as claimed in any one of Claims 2 to 4, characterised in that there are three resilient means (21) and the leaf springs (22) are arranged in the form of a triangle around the hub flange (12) with the radially acting resilient members (23) being located at each radially outer mid face of the triangle.

6.    A driven plate as claimed in any one of Claims 1 to 5, in which the friction facing carrier member (15) comprises a carrier plate (16) and a retainer plate (17) located one on each side of a hub flange (12) on the hub member (11), said carrier and retainer plates (16) and (17) being held together by rivets (18), characterised in that said rivets (18) also serve to operate the resilient means (22) during said rotation.

7.    A driven plate as claimed in Claim 3, Claim 4 and any one of Claims 5 and 6 when dependent upon Claim 3, characterised in that the radial compression of each elastomeric block (23) is limited by limiting the radial movement of its respective leaf spring (22) by opposed axial lugs (24) on the leaf spring engaging in its respective elongated radial slots (25) in the facing carrier.

8.    A driven plate as claimed in any one of the preceeding claims, characterised in that each leaf spring (22) comprises two or more leaves (26) of stepwise decreasing length, so that the outer portions only of each leaf spring come into operation initially, and the spring (22) is then moved radially outwards to compress its respective resilient member.

0073586

-12-

9.     A driven plate as claimed in Claim 8,
characterised in that the movement of the
outer portions of each leaf spring (22) are limited by
a limit pin (28).

10.     A driven plate as claimed in any one of
Claims 1 to 6, characterised in that each leaf spring
is a single resilient beam (52) which is backed by a
support lever (53) having inclined surfaces (54)
thereon which taper away from the beam so that
the end portions of the beam (52)can be deflected
to take up a clearance 'A' before abutting the
lever (53).

11.     - A driven plate as claimed in Claim 10,
characterised in that the leaf springs (52) and their
respective supports (53) all have differing
clearances 'A'.

Fig.1

26

23

16

17

25

21

22

25

11

15

13

18

14    14

Fig.2

25   22   24

25

25

Fig.3

Load
Nm

Y

X

Displacement

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 D 13/68 |
| A | US-A-1 963 187 (WOOD) <br> * Whole document * | 1,2,4, 8 | |
| | --- | | |
| A | US-A-2 724 252 (SCHMAL) <br> * Whole document * | 1,2,5 | |
| | --- | | |
| A | GB-A- 714 644 (LAYCOCK) <br><br> * Page 2; figure 3 * | 1,3,5, 7 | |
| | --- | | |
| A | US-A-1 704 503 (GAMBLE) | | |
| | --- | | |
| A | US-A-1 946 144 (HUGHES) | | TECHNICAL FIELDS SEARCHED (Int. Cl. ³) |
| | --- | | |
| A | US-A-1 959 213 (NYGARD) | | F 16 D <br> F 16 F |
| | --- | | |
| A | FR-A- 883 729 (DAIMLER) | | |
| | --- | | |
| D | GB-A- 473 596 (STANLEY) | | |
| | ----- | | |

The present search report has been drawn up for all claims

| Place of search <br> THE HAGUE | Date of completion of the search <br> 23-11-1982 | Examiner <br> ORTHLIEB CH.E. |
|---|---|---|